# EUROPÄISCHE PATENTSCHRIFT

(11) **EP 0 472 886 B1**
(45) Veröffentlichungstag und Bekanntmachung des Hinweises auf die Patenterteilung: **18.01.1995**
(21) Anmeldenummer: 91112013.7
(22) Anmeldetag: 18.07.1991
(51) Int. Cl.: A23G 1/04, A23G 1/18

(54) **Verfahren und Vorrichtung zum kontinuierlichen Temperieren von kakaobutterhaltigen Massen, insbesondere Schokoladenmasse**
Process and device for the continuous tempering of cacao butter containing masses, especially masses of chocolate
Procédé et appareil pour stabiliser la température de masses contenant du beurre de cacao, en particulier une masse de chocolat

(30) Priorität: 30.08.1990 DE 4027429
(43) Veröffentlichungstag der Anmeldung: 04.03.1992
(73) Patentinhaber: Sollich GmbH & Co. KG, D-32102 Bad Salzuflen (DE)
(72) Erfinder: Sollich, Helmut, W-2341 Rabenkirchen (DE)
(74) Vertreter: Rehberg, Elmar, Dipl.-Ing.

(56) Entgegenhaltungen:
- EP-A- 0 289 849
- EP-A- 0 339 129
- US-A- 4 059 047
- PATENT ABSTRACTS OF JAPAN Band 9, Nr. 306 (C-317)(2029), 3. Dezember 1985; & JP - A - 60145050 (MEIJI SEIKA K.K.) 31.07.1985

## Beschreibung

Die Erfindung bezieht sich auf ein Verfahren zum kontinuierlichen Temperieren von zu verarbeitenden kakaobutterhaltigen oder ähnlichen fetthaltigen Massen, insbesondere Schokolademasse, in einer Temperiermaschine mit mindestens zwei Kühletagen mit Kühlflächen und mindestens einer nachgeschalteten Wärmeetage mit Wärmeflächen, wobei die Masse mit einer Masseeingangstemperatur über eine Pumpe durch Massekammern der Kühletage und der Wärmeetage geführt und dabei zunächst gekühlt, wird, wobei in einem Kristallisationsbereich stabile β-Kristalle gebildet werden, und dann die Masse wieder erwärmt wird, während Kühlkammern an den Kühlflächen von einem Kühlmedium im Gegenstrom und Wärmekammern an den Wärmeflächen von einem Wärmemedium durchströmt werden. Die Erfindung zeigt auch eine Vorrichtung zur Durchführung des Verfahrens mit einer Temperiersäule, die mehrere, einen Zylinder bildende, übereinander angeordnete und an einem Kühlkreislauf für Kühlmedium angeschlossene Kühlkammern mindestens zweier Kühletagen und an einen Wärmekreislauf für Wärmemedium angeschlossene Wärmekammern mindestens einer Wärmeetage aufweist, wobei am Ende der der Wärmeetage zugekehrten letzten Kühletage ein die Temperatur der Masse erfassender Fühler vorgesehen ist.

Ein Verfahren der eingangs beschriebenen Art ist aus der EP-A-289 849 bekannt. Dabei wird die Masse unter Anwendung angetriebener Rührwerkzeuge in den Massekammern gerührt. Die Menge des durch die Kühlkammern strömenden Kühlmediums wird so gesteigert, daß sich ein turbulenter Strömungszustand ergibt. Bei berührungsloser Abnahme der Masse von den Kühl- bzw. Wärmeflächen durch die Rührwerkzeuge wird mit einem Schergefälle im Spalt zwischen den Kühl- bzw. Wärmeflächen einerseits und den Rührwerkzeugen andererseits gearbeitet. Das Kühlmedium durchfließt die Kühlkammern einer oder mehrerer Kühletagen kontinuierlich und wird in großer Menge jeweils in Kreislauf geführt. Über ein Ventil wird kaltes Kühlwasser dem Kreislauf geregelt zugeführt, wobei ein Regler Verwendung findet, der von einem Fühler gesteuert wird, der die Temperatur der Masse erfaßt. Das Kühlmedium wird im Gegenstrom durch die Kühletage geführt. Durch diese Art der Führung des Kühlmediums in Verbindung mit der erheblich gesteigerten Durchsatzmenge an Kühlwasser werden die Nachteile einer Ein/Aus-Schaltung eines Magnetventils in einer Zulaufleitung für Kaltwasser vermieden. Dennoch ist es erforderlich, die Temperatur des Kühlmediums am Eingang in die der Wärmeetage zugekehrten letzten Kühletage zu regeln, um unterschiedlichen Massedurchsatzmengen und/oder Masseeingangstemperaturen Rechnung zu tragen. Hierdurch verändert sich je nach Regelzustand die Temperatur der Kühlflächen, insbesondere im Endbereich der letzten Kühletage. Die Regelung ist darauf ausgerichtet, daß die zu temperierende Masse am Ende der letzten Kühlstufe, also am Übertritt in die nachfolgende Wärmestufe, eine weitgehend konstante Temperatur hat. Eine weitgehend konstante Massetemperatur am Ende der letzten Kühletage ist jedoch nicht gleichbedeutend mit einem konstanten Anteil Kristalle in der Masse.

Die DD-A-136 570 zeigt ein Verfahren und eine Vorrichtung zum kontinuierlichen Temperieren von Schokolademasse mit einer Temperiermaschine, die eine Kühletage, eine Verweiletage und eine nachgeschaltete Wärmeetage aufweist. Jede der drei Etagen ist mit einem eigenen Kühl- bzw. Wärmekreislauf ausgestattet, wobei die Kühlkammern bzw. die Wärmekammern im Gleichstrom zu den Massekammern durchströmt werden. Um die Art und Größe der zu bildenden Kristalle zu beeinflussen und eine Schokolademasse so zu temperieren, daß sie sich bei Verarbeitungstemperatur im Gleichgewichtszustand befindet, wird die Masse durch die drei Etagen nacheinander hindurchgeführt. Die drei Etagen der Temperiermaschine sind etwa gleich groß ausgebildet, jedoch ist das Förderorgan im Bereich der zweiten Temperieretage durch eine Vergrößerung des Querschnitts und/oder Verlängerung der Förderstrecke gegenüber den entsprechenden Bereichen der anderen Etagen verändert. In der ersten Etage wird die Schokolademasse auf eine bestimmte Temperatur, die unterhalb der Verarbeitungstemperatur und oberhalb der kritischen Umwandlungstemperatur der instabilen Kristalle liegt, bis in den kristallinen Grenzbereich abgekühlt. Durch die Vermeidung der kritischen Umwandlungstemperatur wird die Bildung instabiler Kristalle in dieser Etage vermieden. In der zweiten Etage, der Verweiletage, wird durch eine Verringerung der Fördergeschwindigkeit und/oder Verlängerung der Förderstrecke und durch konstante Temperaturführung des Wärmetauschers erreicht, daß die Schokolademasse über einen längeren Zeitraum im stetigen Durchlauf bei konstanter Temperatur gehalten wird. Die konstante Temperaturführung in der Verweiletage erfolgt mit an sich bekannten Temperaturregeleinrichtungen. Damit wird in dieser zweiten Etage erreicht, daß die Schokolademasse einen thermodynamischen Gleichgewichtszustand einnimmt, und daß eine ausreichende Anzahl von Kristallen gebildet werden. Die Schokolademasse verweilt in dieser zweiten Etage eine gewisse Zeit, vorzugsweise 1 bis 3 Min., bevor sie in die dritte Etage gelangt, in welcher die Schokolademasse auf Verarbeitungstemperatur angewärmt wird. Damit ist eine Kühletage, eine Verweiletage und eine nachgeschaltete Wärmeetage vorgesehen. Jede dieser drei Etagen oder Zonen ist mit einem eigenen Kühl- bzw. Wärmekreislauf ausgestattet. Auch die Verweiletage weist somit einen Kühlkreislauf mit einer Meßstelle zur Messung der Wassertemperatur des Kühlwassers als Bestandteil einer Regeleinrichtung auf. Am Ende dieser zweiten Temperierstufe befindet sich auch ein Meßfühler zur Messung der Schokoladetemperatur, der jedoch nicht an die Regeleinrichtung des Kühlkreislaufs dieser zweiten Etage angeschlossen ist. Auch in der dritten Etage, der Wärmeetage, wird auf die Temperatur der Schokolademasse abgestellt, und zwar derart, daß möglichst Temperaturschwankungen der Schokolademasse verhindert werden sollen. Zur Lösung der infolge schwankenden Massedurchsatzes und/oder sich ändernder Masseeingangstemperaturen entstehenden Probleme enthält diese Druckschrift keine Hinweise.

Eine weitere bekannte Temperiermaschine arbeitet mit einer Temperiersäule, bei der zwei Kühletagen und eine Wärmeetage vorgesehen sind. Jede der beiden Kühletagen ist ein eigener, mit einer Pumpe ausgestatteter Kühlkreislauf zugeordnet; ebenso ist ein durch eine Pumpe angetriebener Wärmekreislauf für die Wärmeetage vorgesehen. Auch hier wird das Kühlmedium im Gegenstrom durch die jeweilige Etage geführt. Die Durchsatzmenge des Kühlmediums und des Wärmemediums ist jeweils so gesteigert, daß sich ein turbulenter Strömungszustand ergibt. Die zu temperierende Masse wird mit Hilfe einer Pumpe durch die Temperiermaschine befördert. Unter turbulenter Mischung und fortwährendem Abstreifen der Kühlflächen gibt die Masse Wärme ab bzw. nimmt sie Wärme auf. Am Ende jeder Etage ist je ein Fühler vorgesehen, der die Temperatur der Masse erfaßt und je einen Regler ansteuert, der ein Ventil im Kaltwasserzulauf des betr. Kühl- bzw. Wärmekreislaufs steuert. Die Pumpen an jedem Kreislauf jeder Etage lassen das Kühl- bzw. Wärmemedium kontinuierlich zirkulieren. Die Temperatur des Kühlmediums paßt sich automatisch dem Kühlbedarf an. Durch die Veränderung der Temperatur des Kühlwassers in Abhängigkeit von dem Massedurchsatz und der Masseeingangstemperatur schwankt die Temperatur der Kühlflächen insbesondere endseitig an der letzten, der Wärmeetage zugekehrten Kühletage erheblich bzw. in weiten Grenzen, was der Vorkristallisierung nicht förderlich ist. Es ergeben sich unterschiedliche Viskositäten der zu temperierenden Masse und vor allen Dingen unterschiedliche Anteile an stabilen β-Kristallen, obwohl die Temperatur der Masse am Ende der letzten Kühletage und damit auch am Ende der Wärmeetage nur in vergleichsweise engen Grenzen schwankt.

Der Erfindung liegt die Aufgabe zugrunde, ein Verfahren und eine Vorrichtung zum kontinuierlichen Temperieren von zu verarbeitenden Massen aufzuzeigen, mit denen es möglich ist, einen hohen Kristallgehalt - insbesondere an stabilen β-Kristallen - in möglichst konstanter Weise zu erzeugen, und zwar unabhängig von einem schwankenden Massedurchsatz und/oder einer sich ändernden Masseeingangstemperatur.

Erfindungsgemäß wird dies bei dem Verfahren der eingangs beschriebenen Art dadurch erreicht, daß die wesentliche Kühlung der Masse in der oder den eingangsseitigen, der letzten Kühletage vorangeschalteten Kühletagen erfolgt und daß die Temperatur des Kühlmediums der der Wärmeetage zugekehrten letzten Kühletage, in der die stabilen β-Kristalle gebildet werden, am Eingang in die Kühlkammern unabhängig von wechselnden Masseeingangstemperaturen und/oder Massedurchsatzmengen konstant gehalten wird.

Die wesentliche Kühlung der Masse geschieht außerhalb der letzten Kühletage in der oder den stromauf der Masse vorgeschalteten Kühletagen. Die der Wärmetage zugekehrte letzte Kühletage wird zu einer Kristallisationsetage, indem zumindest endseitig an dieser Etage ein Kristallisationsbereich geschaffen wird, in dem die Kühlflächen im wesentlichen konstante Temperatur aufweisen, wobei diese Kühlflächentemperatur auf die Art der Masse und eine optimale Bildung von Kristallen abgestimmt ist. Der Kristallisationsbereich schließt endseitig an das Ende der letzten Kühletage an. Seine Ausdehnung innerhalb der letzten Kühletage verändert sich. Er ist bei großen Durchsatzmengen größer, bei kleinen Durchsatzmengen kleiner. Damit werden an den Kühlflächen optimale Bedingungen für die Kristallisation und die entsprechende Verweilzeit der Masse in dem Kristallisationsbereich geschaffen. Die Kühlwassertemperatur an dieser Stelle wird also nicht dem augenblicklichen Kühlbedarf angepaßt, sondern mehr oder weniger konstant eingesteuert bzw. eingeregelt. Es versteht sich, daß die Temperatur der Kühlflächen nicht absolut konstantgehalten werden kann, sondern je nach dem Steuer- bzw. Regelvorgang nur in sehr engen Grenzen schwankt, die Bruchteile eines Grades Celsius ausmachen. Mit dem erfindungsgemäßen Verfahren wird eine konstante Schokoladeviskosität erreicht und die Anteile an stabilen β-Kristallen bleiben hoch und konstant. Das Konstanthalten der letzten Kühletage im Gegenstrom zugeführten Kühlmediums zielt darauf ab, die Temperatur der Kühlflächen der der Wärmeetage zugekehrten letzten Kühletage zumindest in dem endseitigen Kristallisationsbereich weitgehend konstant zu halten. Wesentlich für die Kristallisierung ist an sich nicht die Temperatur des Kühlmediums, welches im Gegenstrom durch die letzte Kühletage geführt wird, sondern die Temperatur der Kühlflächen, mit denen die Masse in der letzten Kühletage in Berührung kommt. Wenn jedoch die Temperatur des Kühlmediums an dieser Stelle etwa konstant ist, kann man darauf schließen, daß auch die Temperatur der Kühlflächen im wesentlichen konstant ist. Bei dem neuen Verfahren werden gleichsam drei Stufen geschaffen, nämlich Kühletagen für die Kühlung, eine Kristallisationsetage für die Kristallisierung und eine Wärmeetage für das Aufschmelzen der unstabilen β'-Kristalle.

Das Kühlmedium in den Kühlkammern der Kühletagen wird vorzugsweise kontinuierlich umgewälzt; dabei wird die Temperatur des Kühlmediums in der oder den eingangsseitigen Kühletagen in Abhängigkeit von der Temperatur der Masse am Ende der endseitigen Kühletage gesteuert bzw. geregelt. Durch diesen Verfahrensschritt ist sichergestellt, daß die Masse auch bei unterschiedlichen Massedurchsätzen und unterschiedlichen Masseeingangstemperaturen in die erste Kühletage in der letzten Kühletage oder Kristallisationsetage den für sie vorgesehenen Kristallisationsbereich vorfindet, der zur Bildung eines konstanten Anteils von Kristallen führt.

Die Temperatur der Kühlfläche der der Wärmeetage zugekehrten letzten Kühletage wird unabhängig von der Art der Masse auf einen nicht zu überschreitenden Wert von max. 18°C eingestellt. Dies geschieht zumindest in einem endseitigen Kristallisationsbereich, also einem Bereich, in welchem stabile β-Kristalle gebildet werden und der sich von seinem Ende, also zugekehrtzu dem Beginn der Wärmeetage, nach rückwärts entgegen der Fließrichtung der Schokolademasse mehr oder weniger weit innerhalb der letzten Kühletage erstreckt. Der angegebene Maximalwert von 18°C wird abhängig von der Art der Masse, also insbesondere ihrer Zusammensetzung, nach Erfahrungswerten vorgegeben und eingestellt. Für helle Schokolade gilt bevorzugt der Bereich von 12 bis 16°C, für dunkle Schokolade oder auch für fettarme Massen empfiehlt sich ein höherer Bereich von 15 bis 18°C.

Eine zur Durchführung des Verfahrens geeignete Vorrichtung arbeitet mit einem die Temperatur der Masse erfassenden Fühler, der am Ende der der Wärmeetage zugekehrten letzten Kühletage vorgesehen ist, und kennzeichnet sich erfindungsgemäß dadurch, daß an den Fühler ein Regler zur Beeinflussung des Durchsatzes und/oder der Temperatur des Kühlmediums einer vorangehenden anderen Kühletage angeschlossen ist und daß jede Kühletage mit einem eigenen Kühlkreislauf ausgestattet ist und daß in dem zu der letzten Kühletage führenden Kühlkreislauf ein Temperaturfühler zur Konstanthaltung der Temperatur des Kühlmediums vorgesehen ist. Während bisher im Stand der Technik die vorgesehenen Fühler immer nur zur Steuerung bzw. Regelung des Kühlmediums der Etage, in der der Fühler angeordnet ist, Verwendung findet, steuert der Fühler jetzt einen Regler einer anderen vorangehenden Kühletage an. Damit wird die letzte Kühletage oder Kühlzone vor der Wärmetage oder Wärmezone gleichsam frei von Kühlarbeit, die jetzt in der oder den vorangehenden Kühletagen oder Kühlzonen durchgeführt wird, während die letzte Kühletage oder Kühlzone Kristallisationsaufgaben erfüllt.

Für sämtliche Kühletagen kann ein durch eine gemeinsame Pumpe angetriebener Kühlkreislauf vorgesehen sein, der sich zwischen der Pumpe und den Eingängen in die Kühlkammern der einzelnen Kühletagen verzweigt; eingangsseitig kann in dem zu einer vorangehenden Kühletage führenden Abzweig ein modulierendes Ventil angeordnet sein, welches an den Regler angeschlossen ist. Es handelt sich dabei um ein solches Ventil, welches nicht nur die beiden Stellungen Auf und Zu besitzt, sondern welches stufenlos oder in vielen kleinen Stufen, beispielsweise angetrieben durch einen Schrittmotor o. dgl., beispielsweise den Durchsatz feinfühlig und gleichsam stufenlos beeinflußt. Es ist aber auch möglich, an der Stelle dieses Abzweigs zu einer vorangehenden Kühletage ein modulierendes Ventil anzuordnen, welches an eine Zuleitung für Kaltwasser angeschlossen ist. In dem zu der letzten Kühletage führenden Abzweig braucht kein Steuerelement vorgesehen zu sein. In Verbindung mit der gemeinsamen Pumpe ist es möglich, eine Anlage mit besonders geringem maschinellen Aufwand aufzubauen und zu betreiben. Wenn das modulierende Ventil als ein den Querschnitt und damit den Widerstand in dem Abzweig zu der vorangehenden Kühletage regelndes Organ ausgebildet ist, kann die Charakteristik der gemeinsamen Pumpe sinnvoll genutzt werden. Bei sich verringerndem Massedurchsatz oder sinkender Masseeingangstemperatur muß in den vorangehenden Kühletagen weniger gekühlt werden, so daß also das modulierende Ventil in Richtung auf seine Schließstellung betätigt wird.

Hierdurch steigt der Druck ausgangsseitig an der gemeinsamen Pumpe an, wodurch gemäß dem Kennfeld der Pumpe sich auch der Durchsatz des Kühlwassers durch die Pumpe vermindert. Damit wird zugleich der Durchsatz des Kühlmediums in der letzten Kühletage vermindert, was im Sinn der angestrebten Regelung geschieht. Andererseits wäre es natürlich auch möglich, die gemeinsame Pumpe entsprechend geregelt anzutreiben bzw. zu steuern.

Das modulierende Ventil kann ein motorgesteuertes Durchsatzventil sein. Eingangsseitig ist in dem zu der letzten Kühletage führenden Abzweig der Temperaturfühler für das Kühlmedium vorgesehen, an den über einen weiteren Regler ein Ventil in einer Zulaufleitung zur Pumpe für Kaltwasser angeschlossen ist. Über diesen Regelkreis wird die Temperatur des Kühlmediums, welches die letzte Kühletage im Gegenstrom durchströmt, konstantgehalten. Das Kühlmedium gelangt zwar auch in die anderen Kühletagen mit dieser gleichen Temperatur; hier wird jedoch eine Regelung über den Durchsatz durchgeführt. Es versteht sich, daß für den Fachmann auch andere Vorrichtungen und Anlagen denkbar sind, die zur Durchführung des Verfahrens geeignet sind.

So kann bei einer anderen Vorrichtung zumindest für die endseitige Kühletage einerseits und die vorangehende oder vorangehenden Kühletagen andererseits weitgehend getrennte, über je eine Pumpe angetriebene Kühlkreisläufe vorgesehen sein; der der endseitigen Kühletage zugeordnete Kreislauf weist einen Temperaturfühler, der eingangsseitig im Kühlmedium angeordnet ist, und einen weiteren Regler und ein daran angeschlossenes Ventil in einer Zulaufleitung zur Pumpe für Kaltwasser auf. Der weitere Regler für die Temperatur des Kühlmediums der vorangehenden Kühletage wird von dem die Temperatur der Masse erfassenden Fühler am Ende der letzten Kühletage gesteuert. Bei der Anwendung getrennter Kühlkreisläufe kann eine noch feinfühligere Regelung erfolgen. Freilich ist hier der maschinelle Aufwand etwas höher als bei Verwendung einer einzigen gemeinsamen Pumpe. Die der letzten Kühletage vorangehenden Kühletagen oder Kühlzonen können wiederum durch einen gemeinsamen Kühlkreislauf oder durch mehrere Kühlkreisläufe geregelt werden.

Bei vielen Ausführungsformen der Vorrichtung bzw. Anlage kann als Pumpe oder als Pumpen solche mit konstantem Durchsatz bei turbulenten Strömungsverhältnissen im Kühlmedium vorgesehen sein. Turbulente Strömungsverhältnisse auf der Kühlwasserseite sind in jedem Fall förderlich. Auch auf der Masseseite kann Turbulenz in der Massebewegung vorgesehen sein, insbesondere bei großen Massedurchsätzen. Dabei können angetriebene Rührwerkzeuge grundsätzlich in den Massekammern umlaufend vorgesehen sein, die berührungslos die Masse immer wieder von den Kühlflächen abnehmen, durchmischen und vergleichmäßigen. Dies ist insbesondere in der Kristallisationsetage wichtig.

Ausführungsbeispiele von Vorrichtung, die zur Durchführung des Verfahrens geeignet sind, werden im Folgenden beschrieben. Es zeigen:
- Figur 1: ein Schaltschema einer ersten Ausführungsform der Vorrichtung,
- Figur 2: ein Schaltschema einer zweiten Ausführungsform der Vorrichtung und
- Figur 3: ein Diagramm des Verlaufs der Massetemperatur in Massedurchflußrichtung durch die Vorrichtung bei verschiedenen Durchsätzen.

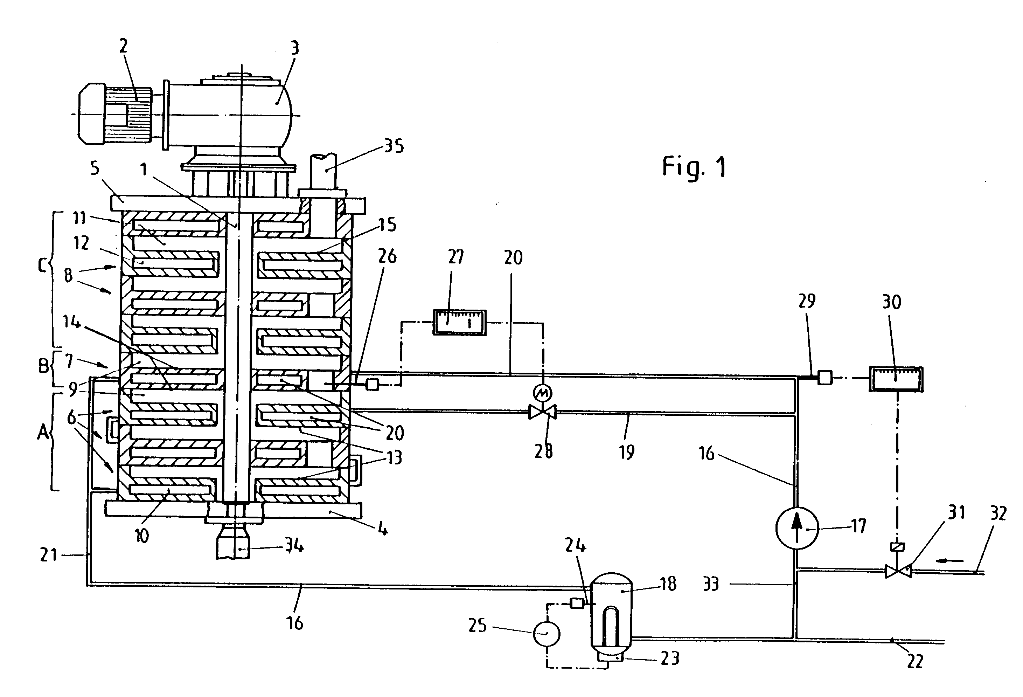

Die in Figur 1 schematische Vorrichtung weist im wesentlichen zylindrische Gestalt auf und ist mittig von einer Antriebswelle 1 durchsetzt, die von einem Motor 2 über ein Getriebe 3 her angetrieben wird. Zwischen einer Bodenplatte 4 und einer Deckplatte 5 sind mehrere vorangehende Kühletagen 6, eine letzte Kühletage 7 und eine Wärmeetage 8 vorgesehen. Die Kühletagen 6, 7 besitzen Massekammern 9 und Kühlkammern 10. Die Wärmeetage 8 weist Massekammern 11 und Wärmekammern 12 auf. Es versteht sich, daß die Ausdehnung und Aufteilung der einzelnen Etagen nur beispielhaft verdeutlicht ist. Wichtig ist, daß mindestens eine Kühletage 6, eine letzte Kühletage 7 und eine Wärmeetage 8 vorgesehen sind, wobei diese Etagen bzw. Zonen unterschiedliche Erstreckung aufweisen können. Es können auch mehrere Kühletagen 6 der letzten Kühletage 7 vorgeschaltet sein. Die einzelnen Etagen bzw. Zonen können von Ringen aufgebaut sein. In den Massekammern 9 und 11 sind nicht dargestellte Rührwerkzeuge untergebracht, die die Masse beim Durchgang durch die Temperiersäule von den Flächen der Massekammern abnehmen, vermischen und verwirbeln und so für eine Homogenisierung sorgen. Die Masse wird am unteren Ende der Temperiersäule durch eine nicht dargestellte Massepumpe in die Vorrichtung eingebracht und durch diese hindurchgefördert. In der Masse liegen vorzugsweise turbulente Strömungsverhältnisse vor.

Die Massekammern 9 der Kühletagen 6 und 7 werden von Kühlflächen 13 und 14 begrenzt, während die Massekammern 11 der Wärmeetage 8 von Wärmeflächen 15 umgeben sind.

Zur Durchströmung der Kühlkammern 10 der vorangehenden Kühletagen 6 und der letzten Kühletage 7 ist hier ein gemeinsamer Kühlkreislauf 16 mit gemeinsamer Pumpe 17 und einem Boiler 18 gebildet, der sich in Strömungsrichtung des Kühlmediums in zwei Abzweige 19 und 20 verzweigt, wobei der Abzweig 19 den Kühletagen 6 und der Abzweig 20 der Kühletage 7 zugeordnet ist. Die Kühletagen 6 und 7 werden im Gegenstrom durchströmt und das Kühlmedium sammelt sich in einer gemeinsamen Rücklaufleitung 21, die zum Boiler 18 zurückführt und eine Überlaufleitung 22 aufweist, über die überschüssiges Wasser abgeführt wird. Der Boiler 18 ist mit einer Heizung 23 ausgestattet, die im Nachtbetrieb in der Stellung Wärmen in Funktion gesetzt wird und über einen Fühler 24 und einen Thermostaten 25 im Sinn der Erzeugung einer gleichmäßig hohen Temperatur betreibbar ist.

Ähnlich wie der hier aufgezeigte Kühlkreislauf 16 ist auch die Wärmeetage 8 mit einem Wärmekreislauf versehen, der jedoch nicht dargestellt ist. Der Wärmekreislauf kann mit dem Kühlkreislauf 16 auch Verbindung haben oder aber auch völlig getrennt davon vorgesehen sein.

An dem der Wärmeetage 8 zugekehrten Ende der letzten Kühletage 7 ist ein Fühler 26 vorgesehen, der die Temperatur der Masse beim Übertritt von der letzten Kühletage 7 in die sich anschließende Wärmeetage 8 erfaßt. Dem Fühler 26 ist ein Regler 27 nachgeschaltet, der ein modulierendes Ventil 28 im Abzweig 19 regelt. Es wird ausdrücklich darauf hingewiesen, daß der Fühler 26, obwohl er am Ende der letzten Kühletage 7 angeordnet ist, zur Regelung des Kühlkreislaufs in den vorangehenden Kühletagen 6 bestimmt ist. Das modulierende Ventil 28 kann ein Durchsatzventil sein, mit dessen Hilfe sich unter Verwendung eines Motors der Durchsatz des Kühlmediums durch die Kühlkammern 10 der Kühletagen 6 feinfühlig regeln läßt.

Im Abzweig 20 ist ein Fühler 29 zum Erfassen der Temperatur des Kühlmediums am Eingang in die letzte Kühletage 7 vorgesehen. Dem Fühler 29 ist ein weiterer Regler 30 nachgeschaltet, der ein Ventil 31, welches als Magnetventil ausgebildet sein kann, regelt. Das Ventil 31 ist in einer Zulaufleitung 32 für Kaltwasser angeordnet, die saugseitig von der gemeinsamen Pumpe 17 an ein Leitungsstück 33 angeschlossen ist, welches von dem Boiler 18 zu der Pumpe 17 führt. Der Regler 30 dient dazu, die Eintrittstemperatur des Kühlwassers in die Kühletagen 6 und 7 weitgehend konstantzuhalten. Dabei kommt es darauf an, daß insbesondere die Kühlfläche 14 der letzten Kühletage 7 endseitig, also der Wärmeetage 8 zugekehrt, in einem mehr oder weniger großen Bereich, einem Kristallisationsbereich, eine konstante Temperatur aufweist. Diese Temperatur wird je nach der Art der zu temperierenden Masse, insbesondere ihrer Zusammensetzung und den gewünschten Bearbeitungseigenschaften, am weiteren Regler eingestellt. Die Einstellung erfolgt aufgrund von Erfahrungswerten.

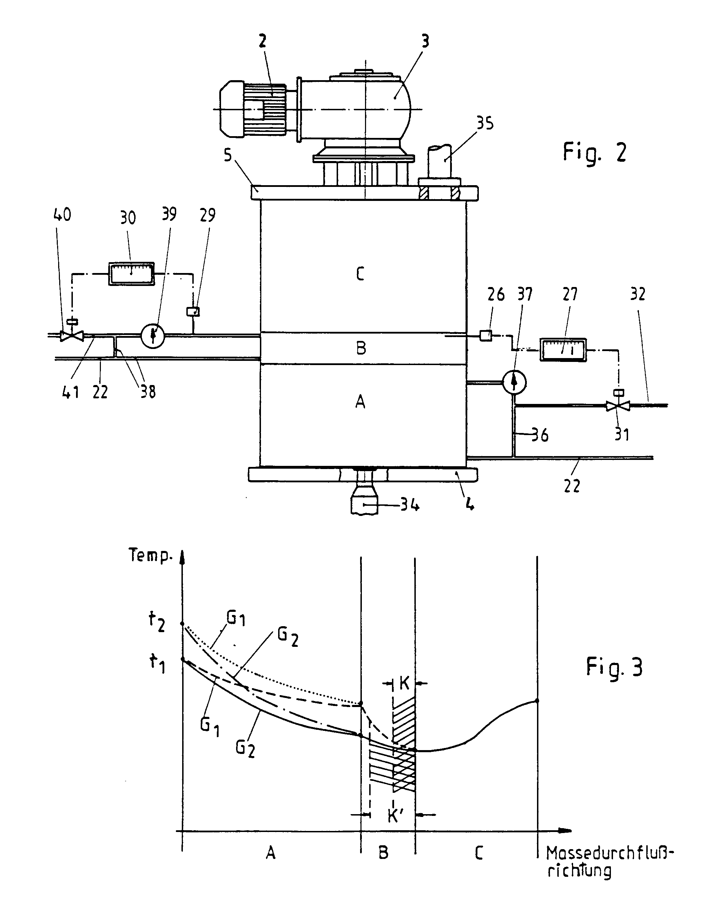

Die zu temperierende Masse gelangt am Masseeingang 34 mit einer bestimmten Masseeingangstemperatur und mit entsprechendem Durchsatz in die Temperiersäule, wird dort zunächst gekühlt und dann wieder erwärmt und verläßt die Vorrichtung über einen Masseausgang 35, von dem aus sie dann einer Weiterverarbeitung zugeführt wird. Die Masse kann am Masseeingang 34 verschiedene Masseeingangstemperaturen, beispielsweise in einem Temperaturbereich zwischen 43 und 50°C aufweisen. Am Masseausgang 35 soll die Masse Ausgangstemperaturen in der Größenordnung von 30 bis 33°C aufweisen. Die Vorrichtung gemäß Figur 1 wird nun in der Weise betrieben, daß die wesentliche Kühlung der Masse in den vorgeschalteten Kühletagen 6 durchgeführt wird. Diese Kühletagen 6, von denen mindestens eine vorgesehen sein muß, jedoch auch mehrere vorgesehen sein können, sind insgesamt als Kühlzone A bezeichnet. In der nachgeschalteten letzten Kühletage 7, die auch aus mehreren Ringen oder Etagen aufgebaut sein kann und die als letzte Kühlzone B zusammenfassend bezeichnet ist, wird nur eine geringe Kühlarbeit geleistet. Die Verhältnisse sind hier so gewählt und abgestimmt, daß ein Kristallisationsbereich K (Figur 3) geschaffen wird, der endseitig, also an der Übergangsstelle zwischen der letzten Kühletage 7 und der nachgeschalteten Wärmeetage 8 endet und sich mehr oder weniger weit entgegen der Massedurchflußrichtung über die Kühlzone B erstreckt. Dieser Kristallisationsbereich der Kühlzone B bzw. der letzten Kühletage 7 ist ein Bereich, in welchem die Temperatur der Kühlfläche 14 möglichst konstant auf einer solch niedrigen Temperatur gehalten wird, bei der sich ein möglichst hoher Anteil von Kristallen, insbesondere von stabilen β-Kristallen, in der Masse bildet. An die Kühlzone B schließt sich eine Nachwärmzone C an, die von der Wärmeetage 8 gebildet wird und eine flächenmäßige Ausdehnung aufweisen kann, die zweckmäßig der Summe der Kühlflächen 13 und 14 der Kühletagen 6 und 7 bzw. der Kühlzonen A und B entspricht. In der Nachwärmzone C werden die instabilen β'-Kristalle in der Masse, die sich ebenfalls im Kristallisationsbereich gebildet haben, wieder aufgeschmolzen.

Wenn sich die Temperatur und/oder der Durchsatz am Masseeingang 34 erhöht, so führt dies zunächst zu einer Erhöhung der Massetemperatur am Übergang zwischen der Kühlzone B in die Nachwärmzone C. Diese Temperaturerhöhung wird von dem Fühler 26 in der Masse erfaßt und der Regler 27 steuert das modulierende Ventil 28 in der Weise, daß das Ventil mehr geöffnet wird, wodurch sich der Widerstand in dem Abzweig 19 erniedrigt und mehr Kühlwasser durch die Kühlzone A strömt. Hierdurch wird die Masse in der Kühlzone A stärker gekühlt, so daß ihre vorher angestiegene Temperatur am Übergang zwischen den Kühlzonen A und B etwa auf einen solchen Wert wieder gesenkt wird, der vor der Erhöhung der Masseeintrittstemperatur und des Durchsatzes vorlag. Durch die Erniedrigung des Widerstands auf der Druckseite der Pumpe 17 steigt gemäß dem Kennfeld der Pumpe 17 der von ihr geförderte Durchsatz an Kühlwasser entsprechend an, so daß der Durchsatz im Abzweig 20 etwa konstant bleibt. Die Verhältnisse und insbesondere die Temperatur der Kühlfläche 14 im Bereich der Kühlzone B ist aber im endseitigen Kristallisationsbereich K etwa konstantgehalten, so daß auch weiterhin konstante Verhältnisse hinsichtlich einer optimalen Bildung von stabilen β-Kristallen in der Kühlzone B vorliegen.

Erniedrigt sich innerhalb eines Produktionsverfahrens plötzlich die Masseeingangstemperatur und/oder der Durchsatz, so wird dies zunächst zu einem Abfall der Massetemperaturen am Übergang von der Kühlzone A zur Kühlzone B und auch zur Nachwärmzone C führen. Auch dies wird von dem Fühler 26 registriert. Die Kühlleistung in der Kühlzone A muß reduziert werden. Der Regler 27 regelt das modulierende Ventil 28 im Sinne einer Durchsatzverminderung des Kühlmediums durch den Abzweig 19. Das modulierende Ventil 28 wird also vergleichsweise mehr geschlossen. Es sei darauf hingewiesen, daß die umgewälzte Wassermenge in den Kühlzonen A und B immer noch so groß ist, daß auch auf der Seite des Kühlmediums turbulente Strömungsverhältnisse herrschen. Durch das weitere Schließen des modulierenden Ventils 28 wird der Durchstromquerschnitt eingeengt und der Widerstand an der Ausgangsseite der Pumpe 17 steigt an, wodurch die Pumpe ihre geförderte Durchsatzmenge etwas verringert. Die Abstimmung zwischen den Querschnitten und der gewählten Pumpe 17 kann so getroffen sein, daß bei solchen Verstellungen des modulierenden Ventils 28 sich die Verhältnisse im Abzweig 20 und damit an den Kühlflächen 14 der Kühlzone B und insbesondere der Kristallisationszone K nicht ändern. Auf diese Weise ist es möglich, trotz sich verändernder Masseeingangstemperatur und sich veränderndem Durchsatz konstante Temperaturen an den Kühlflächen 14 des Kristallisationsbereichs bzw. der Kühlzone B aufrechtzuerhalten.

Die Verhältnisse sind in ihrer Tendenz anhand der Figur 3 nochmals verdeutlicht. Figur 3 zeigt den Temperaturverlauf über die Massedurchflußrichtung, und zwar in den Kühlzonen A und B und der nachgeschalteten Nachwärmzone C. In durchgezogener Linienführung ist ein vergleichsweise großer Massedurchsatz G2, der beispielsweise 1000 kg/h betragen kann, dargestellt, und zwar mit einer vergleichsweise niedrigen Masseeingangstemperatur t1. Die wesentliche Kühlarbeit wird in der Kühlzone A vorgenommen, so daß der Temperaturunterschied zwischen dem Eingang und dem Ausgang an der Kühlzone B nicht besonders groß ist. Die sich innerhalb der Kühlzone B ausbildende Kristallisationszone K' hat eine erhebliche Ausdehnung (großer Massedurchsatz) und nimmt fast die gesamte Kühlzone B ein. Die Kristallisationszone K' zeigt eine Zone, in welcher die Temperatur der Kühlflächen 14 weitgehend konstant ist und sich die Masse nur minimal abkühlt, wobei in diesem Bereich ein optimales Kristallwachstum stattfindet.

Die strichpunktierte Linie gilt ebenfalls für eine Durchsatzmenge G2, jedoch mit einer vergleichsweise höheren Masseeintrittstemperatur t2. Auch hier wird die wesentliche Kühlarbeit in der Kühlzone A durchgeführt, und zwar etwa so, daß bei diesem Durchsatz unabhängig von den Masseeintrittstemperaturen t1 oder t2 am Ende der Kühlzone A etwa die Masse eine identische Temperatur besitzt, so daß sich auch hier bei diesem Fall der Kristallisationsbereich K' relativ großvolumig ausbildet.

Die gestrichelte und die gepunktete Linie gelten für einen vergleichsweise niedrigeren Massedurchsatz G1, der beispielsweise 500 kg/h betragen kann. Die gestrichelte Linie gilt für eine niedrige Masseeingangstemperatur t1. Die gepunktete Linie für eine vergleichsweise höhere Masseeingangstemperatur t2. Auch hier wird die wesentliche Kühlarbeit in der Kühlzone A sowie noch eingangsseitig in der Kühlzone B geleistet, wobei die Übertrittstemperaturen der Masse zwischen den Kühlzonen A und B in etwa übereinstimmen. Infolge des geringeren Massedurchsatzes ist auch die Geschwindigkeit der Masse in Massedurchflußrichtung geringer, so daß die Kontakt- oder Verweilzeit der Masse in den Massekammern 9 größer ist. Infolgedessen bildet sich hier in der Kühlzone B ein vergleichsweise kleinerer Kristallisationsbereich K aus, in welchem die Massetemperatur nur unbedeutend abnimmt und die Kühlflächen 14 ebenfalls weitgehend konstant temperiert sind. Man erkennt an Figur 3, daß sämtliche Kurven am Übergang zwischen der Kühlzone B und der Wärmezone C in etwa gleichem Temperaturpunkt enden und sich stromauf an diesen Punkt verschieden große Kristallisationsbereiche K, K' anschließen. In der Nachwärmzone C wird die Masse wieder erwärmt. Dies geschieht durch einen gesonderten, hier nicht dargestellten Wärmekreislauf mit entsprechender Steuerung.

Figur 2 zeigt ein zweites Ausführungsbeispiel der Vorrichtung, welches in seiner Darstellung noch weiter schematisiert ist. Es sind hier die auch anhand der Figur 1 verdeutlichten Kühlzonen A und B sowie die Nachwärmzone C dargestellt. Der Kühlzone A, die aus mindestens einer, jedoch auch aus mehreren Kühletagen 6, bestehen kann, ist ein separater Kühlkreislauf 36 zugeordnet. Jede Kühletage 6 kann auch mit einem gesonderten Kühlkreislauf ausgestattet sein. In dem Kühlkreislauf 36 ist eine Pumpe 37 angeordnet, die das Kühlmedium in beachtlicher Menge und unter turbublenten Strömungsbedingungen im Gegenstrom durch die Kühlkammern 10 der Kühletagen 6 fördert. Der Einfachheit halber ist hier der Boiler sowie weitere Einrichtungen nicht dargestellt. Es ist eine Zulaufleitung 32 für Kaltwasser an den Kühlkreislauf 16 angeschlossen. In der Zulaufleitung 32 ist ein Ventil 31 angeordnet, welches von dem Regler 27 betätigt wird, dem seinerseits der Fühler 26 in der Masse am Ende der Kühlzone B vorgeschaltet ist. Jede Veränderung der Massetemperatur an dieser Stelle wird dadurch ausgeregelt, daß mehr oder weniger Kaltwasser aus der Zulaufleitung 32 in den Kühlkreislauf 36 eingespeist wird, wodurch die Temperatur des Kühlmediums im Kühlkreislauf entsprechend erniedrigt oder erhöht wird.

Für die Kühlzone B ist ein separater Kühlkreislauf 38 mit Pumpe 39 vorgesehen. Der Temperaturfühler 29 überwacht die Eintrittstemperatur des Kühlmediums in die Kühlzone B und damit zu den endseitigen Kühlflächen 14, Über den weiteren Regler 30 wird ein Ventil 40 in einer weiteren Zulaufleitung 41 für Kaltwasser geregelt. Über eine Überlaufleitung 22 wird überschüssiges Kühlwasser, welches nicht im Kreis gepumpt wird, aus dem Kreislauf 38 herausgenommen. Es versteht sich, daß die über die Überlaufleitung 22 abgeführte Wassermenge der über die Zulaufleitung 41 zugeführten Wassermenge entspricht. Am Regler 30 wird auch hier eine weitgehend konstante, nicht zu hoch liegende Temperatur des Kühlmediums des Kühlkreislaufs 38 und damit der Kühlflächen 14 endseitig an der Kühlzone B eingestellt. Die eingestellten Temperaturen liegen in einer Größenordnung von etwa 14 bis 18°C und richten sich nach Erfahrungswerten für die jeweilige Masse.

### Bezugszeichenliste:

- 1: = Antriebswelle
- 2: = Motor
- 3: = Getriebe
- 4: = Bodenplatte
- 5: = Deckplatte
- 6: = Kühletagen
- 7: = letzte Kühletage
- 8: = Wärmeetage
- 9: = Massekammern
- 10: = Kühlkammern
- 11: = Massekammern
- 12: = Wärmekammern
- 13: = Kühlfläche
- 14: = Kühlfläche
- 15: = Wärmefläche
- 16: = Kühlkreislauf
- 17: = Pumpe
- 18: = Boiler
- 19: = Abzweig
- 20: = Abzweig
- 21: = Rücklaufleitung
- 22: = Überlaufleitung
- 23: = Heizung
- 24: = Fühler
- 25: = Thermostat
- 26: = Fühler
- 27: = Regler
- 28: = modulierendes Ventil
- 29: = Fühler
- 30: = Regler
- 31: = Ventil
- 32: = Zulaufleitung
- 33: = Leitungsstück
- 34: = Masseeingang
- 35: = Masseausgang
- 36: = Kühlkreislauf
- 37: = Pumpe
- 38: = Kühlkreislauf
- 39: = Pumpe
- 40: = Ventil
- 41: = Zulaufleitung

## Patentansprüche

1. Verfahren zum kontinuierlichen Temperieren von zu verarbeitenden kakaobutterhaltigen oder ähnlichen fetthaltigen Massen, insbesondere Schokolademasse, in einer Temperiermaschine mit mindestens zwei Kühletagen (6, 7) mit Kühlflächen (13, 14) und mindestens einer nachgeschalteten Wärmeetage (8) mit Wärmeflächen (15), wobei die Masse mit einer Masseeingangstemperatur über eine Pumpe durch Massekammern (9, 11) der Kühletagen (6, 7) und der Wärmeetage (8) geführt und dabei zunächst gekühlt, wird, wobei in einem Kristallisationsbereich stabile β-Kristalle gebildet werden, und dann die Masse wieder erwärmt wird, während Kühlkammern (10) an den Kühlflächen (13, 14) von einem Kühlmedium im Gegenstrom und Wärmekammern (12) an den Wärmeflächen (15) von einem Wärmemedium durchströmt werden, dadurch gekennzeichnet, daß die wesentliche Kühlung der Masse in der oder den eingangsseitigen, der letzten Kühletage (7) vorangeschalteten Kühletagen (6) erfolgt und daß die Temperatur des Kühlmediums der der Wärmeetage (8) zugekehrten letzten Kühletage (7), in der die stabilen β-Kristalle gebildet werden, am Eingang in die Kühlkammern (10) unabhängig von wechselnden Masseeingangstemperaturen und/oder Massedurchsatzmengen konstantgehalten wird.

2. Verfahren nach Anspruch 1, dadurch gekennzeichnet, daß das Kühlmedium in den Kühlkammern (10) der Kühletagen (6, 7) kontinuierlich umgewälzt wird und dabei die Temperatur des Kühlmediums in der oder den eingangsseitigen Kühletagen (6) in Abhängigkeit von der Temperatur der Masse am Ende der letzten Kühletage (7) gesteuert bzw. geregelt wird.

3. Verfahren nach Anspruch 1 oder 2, dadurch gekennzeichnet, daß die Temperatur der Kühlfläche (14) der der Wärmeetage (8) zugekehrten letzten Kühletage (7) abhängig von der Art der Masse auf einen nicht zu überschreitenden Wert vom max. 18°C eingestellt wird.

4. Vorrichtung zur Durchführung des Verfahrens nach einem der Ansprüche 1 bis 3, mit einer Temperiersäule, die mehrere, einen Zylinder bildende, übereinander angeordnete und an einen Kühlkreislauf für Kühlmedium angeschlossene Kühlkammern (10), mindestens zwei Kühletagen (6, 7) und an einen Wärmekreislauf für Wärmemedium angeschlossene Wärmekammern (12) mindestens einer Wärmeetage (8) aufweist, wobei am Ende der der Wärmeetage (8) zugekehrten letzten Kühletage (7) ein die Temperatur der Masse erfassender Fühler (26) vorgesehen ist, dadurch gekennzeichnet, daß an den Fühler (26) ein Regler (27) zur Beeinflussung des Durchsatzes und/oder der Temperatur des Kühlmediums einer vorangehenden anderen Kühletage (6) angeschlossen ist und daß jede Kühletage (6, 7) mit einem eigenen Kühlkreislauf ausgestattet ist und daß in dem zu der letzten Kühletage (7) führenden Kühlkreislauf ein Temperaturfühler (29) zur Konstanthaltung der Temperatur des Kühlmediums vorgesehen ist.

5. Vorrichtung nach Anspruch 4, dadurch gekennzeichnet, daß für sämtliche Kühletagen (6, 7) ein durch eine gemeinsame Pumpe (17) angetriebener Kühlkreislauf (16) vorgesehen ist, der sich zwischen der Pumpe (17) und den Eingängen in die Kühlkammern (10) der einzelnen Kühletagen (6, 7) verzweigt, und daß eingangsseitig in dem zu einer vorangehenden Kühletage (6) führenden Abzweig (19) ein modulierendes Ventil (28) angeordnet ist, welches an den Regler (27) angeschlossen ist.

6. Vorrichtung nach Anspruch 5, dadurch gekennzeichnet, daß das modulierende Ventil (28) ein motorgesteuertes Durchsatzventil ist.

7. Vorrichtung nach Anspruch 4, dadurch gekennzeichnet, daß zumindest für die endseitige Kühletage (7) einerseits und die vorangehende oder vorangehenden Kühletagen (6) andererseits weitgehend getrennte, über je eine Pumpe (39, 37) angetriebene Kühlkreisläufe (38, 36) vorgesehen sind, und daß der der letzten Kühletage (7) zugeordnete Kühlkreislauf (38) den Temperaturfühler (29), der eingangsseitig im Kühlmedium angeordnet ist, und einen weiteren Regler (30) und ein daran angeschlossenes Ventil (40) in einer Zulaufleitung (41) zur Pumpe (39) für Kaltwasser aufweist.

8. Vorrichtung nach Anspruch 5 oder 7, dadurch gekennzeichnet, daß als Pumpe (17) oder Pumpen (37, 39) solche mit konstantem Durchsatz bei turbulenten Strömungsverhältnissen im Kühlmedium vorgesehen sind.

## Claims

1. Method for continuously tempering substances, in particular chocolate, which are to be processed and which contain cocoa butter or similar fats, in a tempering machine having at least two cooling stages (6,7) having cooling surfaces (13, 14) and at least one down-stream heating stage (8) having heating surfaces (15), wherein the substance at a substance inlet temperature is directed by way of a pump through substance chambers (9, 11) of the cooling stages (6,7) and of the heating stage (8) and in so doing is initially cooled, wherein stable β-crystals are formed in a crystallisation region and then the substance is reheated, while a cooling medium flows in the reverse direction through the cooling chambers (10) at the cooling surfaces (13, 14) and a heating medium flows through the heating chambers (12) at the heating surfaces (15), characterised in that the substantial cooling of the substance is carried out in the cooling stage(s) (6) connected at the inlet side upstream of the final cooling stage (7) and that the temperature of the cooling medium of the final cooling stage (7) facing the heating stage (8), in which cooling stage (7) are formed the stable β-crystals, is maintained at a constant value at the inlet into the cooling chambers (10) irrespective of changes in the substance inlet temperatures and/or the substance through-flow quantities.

2. Method according to claim 1, characterised in that the cooling medium in the cooling chambers (10) of the cooling stages (6, 7) is continuously circulating and the temperature of the cooling medium in the inlet side cooling stage(s) (6) is controlled and regulated in dependence upon the temperature of the substance at the end of the final cooling stage (7).

3. Method according to claim 1 or 2, characterised in that the temperature of the cooling surface (14) of the final cooling stage (7) facing the heating stage (8) is set dependent upon the type of the substance to a maximum value of 18°C which is not to be exceeded.

4. Device for carrying out the method according to any one of claims 1 to 3, having a tempering column, which comprises a plurality of cooling chambers (10) which are disposed above each other forming a cylinder and are connected to a cooling circuit for cooling medium, at least two cooling stages (6, 7) and at least one heating stage (8) having heating chambers (12) connected to a heating circuit for heating medium, wherein a sensor (26) which detects the temperature of the substance is provided at the end of the final cooling stage (7) facing the heating stage (8), characterised in that a regulator (27) is connected to the sensor (26) for the purpose of influencing the through-flow rate and/or the temperature of the cooling medium of a preceding other cooling stage (6) and that each cooling stage (6, 7) is equipped with its own cooling circuit and that provided in the cooling circuit leading to the final cooling stage (7) is a temperature sensor (29) for the purpose of maintaining the temperature of the cooling medium at a constant value.

5. Device according to claim 4, characterised in that for all cooling stages (6, 7) is provided a cooling circuit (16) which is driven by a common pump (17) and branches between the pump (17) and the inlets into the cooling chambers (10) of the individual cooling stages (6, 7) and that disposed at the inlet side in the branch (19) leading to a preceding cooling stage (6) is a modulating valve (28) which is connected to the regulator (27).

6. Device according to claim 5, characterised in that the modulating valve (28) is a motor-driven throughput valve.

7. Device according to claim 4, characterised in that at least for the end-side cooling stage (7) on the one hand and the preceding cooling stage(s) (6) on the other hand are provided cooling circuits (38, 36) which are to a great extent separate and which are driven respectively by a pump (39, 37) and that the cooling circuit (38) allocated to the final cooling stage (7) comprises in a feed duct (41) to the cold-water pump (39) the temperature sensor (29), which is disposed at the inlet side in the cooling medium and a further regulator (30) and a valve (40) enclosed therein.

8. Device according to claim 5 or 7, characterised in that as pump (17) or pumps (37, 39) are provided pump(s) which have a constant through-flow rate in the case of turbulent flow conditions in the cooling medium.

## Revendications

1. Procédé destiné à tempérer en continu des pâtes contenant du beurre de cacao ou des matières grasses similaires, à traiter, en particulier une pâte de chocolat, dans une machine de conditionnement de température comportant au moins deux étages de refroidissement (6, 7) avec des surfaces de refroidissement (13, 14) et au moins un étage de chaleur (8) avec des surfaces de chaleur (15), montés en aval, la pâte étant envoyée à une température d'entrée, par une pompe, à travers des chambres à pâte (9, 11) des étages de refroidissement (6, 7) et des étages de chaleur (8) et étant d'abord refroidie, des cristaux β stables étant formés dans une zone de cristallisation, puis la masse étant à nouveau chauffée, tandis que des chambres de refroidissement (10) sont traversées, à contre-courant, sur les surfaces de refroidissement (13, 14), par un fluide de refroidissement et des chambres de chaleur (12) sont traversées sur les surfaces de chaleur (15) par un fluide de chaleur, caractérisé en ce que l'essentiel du refroidissement de la pâte s'effectue dans l'étage de refroidissement ou les étages de refroidissement (6) côté entrée, situé en amont du dernier étage de refroidissement (7) et en ce que la température du fluide de refroidissement du dernier étage de refroidissement (7), tourné vers l'étage de chaleur (8), dans lequel sont formés les cristaux β stables, est maintenue constante à l'entrée des chambres de refroidissement (10), indépendamment des variations des températures d'entrée de la pâte et/ou des débits de la pâte.

2. Procédé selon la revendication 1, caractérisé en ce que le fluide de refroidissement est brassé en continu dans les chambres de refroidissement (10) des étages de refroidissement (6, 7) et la température du fluide de refroidissement est commandée ou réglée dans l'étage de refroidissement ou les étages de refroidissement (6) côté entrée, en fonction de la température de la pâte à la fin du dernier étage de refroidissement (7).

3. Procédé selon les revendications 1 ou 2, caractérisé en ce que la température de la surface de refroidissement (14) du dernier étage de refroidissement (7), tourné vers l'étage de chaleur (8), est réglée en fonction du type de pâte, sur une valeur de 18 °C au maximum, à ne pas dépasser.

4. Dispositif pour la mise en oeuvre du procédé selon l'une des revendications 1 à 3, avec une colonne d'équilibrage de température, qui comporte plusieurs chambres de refroidissement (10) superposées, formant un cylindre et raccordées à un circuit de refroidissement d'un fluide de refroidissement, au moins deux étages de refroidissement (6, 7) et des chambres de chaleur (12) d'au moins un étage de chaleur (8), raccordées à un circuit de chaleur d'un fluide de chaleur, à l'extrémité du dernier étage de refroidissement (7), tournée vers l'étage de chaleur (8) étant prévue une sonde (26), enregistrant la température de la pâte, caractérisé en ce qu'à la sonde (26) est connecté un régulateur (27) destiné à influencer le débit et/ou la température du fluide de refroidissement d'un autre étage de refroidissement (6) précédent et en ce que chaque étage de refroidissement (6, 7) est équipé de son propre circuit de refroidissement et en ce que dans le circuit de refroidissement, menant au dernier étage de refroidissement (7), il est prévu une sonde de température (29), destinée à maintenir constante la température du fluide de refroidissement.

5. Dispositif selon la revendication 4, caractérisé en ce que pour tous les étages de refroidissement (6, 7) il est prévu un circuit de refroidissement (16), entraîné par une pompe (17) commune lequel se ramifie entre la pompe (17) et les entrées, dans les chambres de refroidissement (10) des différents étages de refroidissement (6, 7), et en ce que côté entrée il est prévu, dans la dérivation (29), menant à un étage de refroidissement (6) précédent, une vanne (28) de modulation, qui est raccordée au régulateur (27).

6. Dispositif selon la revendication 5, caractérisé en ce que la vanne (28) de modulation est une vanne de débit motorisée.

7. Dispositif selon la revendication 4, caractérisé en ce qu'au moins pour l'étage de refroidissement (7) côté extrémité d'une part et pour le ou les premier(s) étage(s) de refroidissement (6) d'autre part, il est prévu des circuits de refroidissement (38, 36) pratiquement séparés, entraînés chacun par une pompe (39, 37), et en ce que le circuit de refroidissement (38), associé au dernier étage de refroidissement (7), comporte la sonde de température (29), qui est placée côté entrée dans le fluide de refroidissement, ainsi qu'un autre régulateur (30) et une vanne (40) raccordée à celui-ci, dans une conduite d'arrivée (41) menant à la pompe (39) d'eau froide.

8. Dispositif selon les revendications 5 ou 7, caractérisé en ce qu'il est prévu comme pompe (17) ou pompes (37, 39), des pompes à débit constant lorsque le fluide de refroidissement présente un écoulement avec turbulences.
